(19) Europäisches Patentamt
European Patent Office
Office européen des brevets

(11) **EP 2 725 331 B1**

(12) **EUROPÄISCHE PATENTSCHRIFT**

(45) Veröffentlichungstag und Bekanntmachung des Hinweises auf die Patenterteilung:
**11.07.2018  Patentblatt 2018/28**

(51) Int Cl.:
*G01K 7/42* (2006.01)          *G01K 15/00* (2006.01)

(21) Anmeldenummer: **13004993.5**

(22) Anmeldetag: **18.10.2013**

(54) **Verfahren und Vorrichtung zum Bestimmen einer Betriebstemperatur eines Elektromotors**

Method and device for calculating the operating temperature of an electric motor

Procédé et dispositif de détermination d'une température de service d'un moteur électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2012  DE 102012021020**

(43) Veröffentlichungstag der Anmeldung:
**30.04.2014  Patentblatt 2014/18**

(73) Patentinhaber: **Diehl AKO Stiftung & Co. KG**
**88239 Wangen (DE)**

(72) Erfinder:
• **Florea, Radu Liviu**
**DE - 91224 Pommelsbrunn (DE)**
• **Weinmann, Martin**
**DE - 88339 Bad Waldsee (DE)**

(74) Vertreter: **Diehl Patentabteilung**
**c/o Diehl Stiftung & Co. KG**
**Stephanstrasse 49**
**90478 Nürnberg (DE)**

(56) Entgegenhaltungen:
**EP-A1- 1 677 411          DE-A1-102008 001 807**
**US-A1- 2006 179 895**

**EP 2 725 331 B1**

**Beschreibung**

Die vorliegende Erfindung betrifft ein Verfahren und eine Vorrichtung zum Bestimmen einer Betriebstemperatur eines Elektromotors, insbesondere eines Antriebsmotors eines elektrischen Haushaltsgerätes.

An die Elektromotoren in elektrischen Haushaltsgeräten werden immer höhere Anforderungen gestellt. So werden zum Beispiel die Antriebsmotoren von Wäschetrommeln von Wäschebehandlungsgeräten zur Verkürzung der Programmlaufzeiten und zur Reduzierung des Energie- und Wasserverbrauchs mit immer höheren Drehzahlen und immer kürzeren Stillstandszeiten betrieben. Dabei ist allerdings zu beachten, dass eine Betriebstemperatur des Elektromotors eine vorgegebene Grenztemperatur nicht überschreiten darf.

Als Überhitzungsschutz des Elektromotors können zum Beispiel zusätzliche temperatursensitive Schutzschaltungen oder mit Schutzschaltungen verbundenen Temperatursensoren in die Motorwicklungen integriert werden. Bei großen Stückzahlen, wie sie bei elektrischen Haushaltsgeräten üblich sind, sind diese Maßnahmen jedoch im Allgemeinen zu kostenintensiv.

Die DE 103 61 405 A1 beschreibt ein Wäschebehandlungsgerät mit einer Steueranordnung zum Betreiben eines elektrischen Motors, bei welchem die Steueranordnung Mittel zum Erfassen eines Betriebswertes des Motors aufweist. Die Steueranordnung bewirkt den Betrieb des Motors derart, dass die Betriebstemperatur des Motors einen vorbestimmten Grenzwert nicht überschreitet, wobei die Betriebstemperatur aus einem Mittelwert und/oder einem Summenwert des erfassten Betriebswertes des Motors bestimmt werden kann.

In der DE 101 19 201 A1 wird vorgeschlagen, aus einer Änderung des Stromflusses durch eine Motorwicklung über eine Änderung des temperaturabhängigen Widerstandes eine Temperaturänderung der Motorwicklungen zu berechnen. Aus der DE 103 31 934 B3 ist ein Waschmaschinenmotor bekannt, dessen Steuereinrichtung ein Motormodell zur Steuerung des Motors verwendet, das eine temperaturbezogene Größe verwendet.

US 2006/0179895 A1 zeigt ein Verfahren zur Bestimmung einer Temperatur eines Elektromotors. Hierfür wird eine Temperatur eines Kühlkörpers eines Wechselrichters als Approximation herangezogen.

In EP 1 677 411 A1 ist ein Verfahren zur Ermittlung einer Spulentemperatur eines Elektromotors gezeigt, bei dem kein Temperatursensor verwendet werden soll. DE 10 2008 001 807 A1 offenbart ein Hybridfahrzeug, bei dem eine Rotortemperatur eines Elektromotors während eines Betriebs ermittelt wird.

Der Erfindung liegt die Aufgabe zugrunde, einen verbesserten Überhitzungsschutz für einen von einem Wechselrichter gespeisten Elektromotor zu schaffen. Diese Aufgabe wird gelöst durch ein Verfahren zum Bestimmen einer Betriebstemperatur eines Elektromotors mit den Merkmalen des Anspruchs 1. Besonders bevorzugte Ausgestaltungen und Weiterbildungen der Erfindung sind Gegenstand der jeweiligen Unteransprüche.

Das erfindungsgemäße Verfahren zum Bestimmen einer Betriebstemperatur eines Elektromotors, welcher über einen Wechselrichter gespeist wird, weist die folgenden Schritte auf:

(a) Zuordnen eines Wechselrichters zu einem Elektromotor;
(b) Kalibrieren einer Messwerterfassung wenigstens eines Betriebsparameters des Elektromotors durch den zugeordneten Wechselrichter;
(c) Erfassen wenigstens eines Messwertes wenigstens eines Betriebsparameters des Elektromotors durch den zugeordneten Wechselrichter; und
(d) Bestimmen der Betriebstemperatur des Elektromotors anhand des wenigstens einen Messwertes und des Kalibrierergebnisses des zugeordneten Wechselrichters.

Die vorliegende Erfindung basiert auf dem Grundgedanken, einem Elektromotor einen Wechselrichter zuzuordnen. Mit anderen Worten wird eine feste, d.h. während der Betriebs- bzw. Lebensdauer der Komponenten zusammen bleibende Einheit aus einem Elektromotor und einem Wechselrichter gebildet. Unter diesem Zusammenbleiben ist in diesem Zusammenhang nicht nur eine elektrische und/oder mechanische Verbindung der Komponenten zu verstehen, sondern auch eine rein organisatorische Verknüpfung.

Durch eine solche paarweise und über die gesamte Betriebsdauer der beiden Komponenten feste Zuordnung ist es möglich, den Wechselrichter auf den Elektromotor abzustimmen bzw. anzupassen. Insbesondere kann eine Messwerterfassung wenigstens eines Betriebsparameters des Elektromotors durch den Wechselrichter kalibriert werden, um so zu genaueren Ergebnissen bei der Bestimmung der Betriebstemperatur zu gelangen. Insbesondere ist es dabei möglich, zu erreichen, dass Fertigungstoleranzen der Komponenten (z.B. Elektromotor, Elektronik des Wechselrichters, etc.) keinen oder zumindest keinen nennenswerten Einfluss auf die Bestimmung der Betriebstemperatur haben.

Das erfindungsgemäße Verfahren benötigt während des bestimmungsgemäßen Einsatzes der Komponenten keine zusätzlichen Schutzschaltungen und auch keine Temperatursensoren, sodass der Aufbau des Wechselrichters und des Elektromotors vereinfacht und ihre Herstellungskosten reduziert werden können. Im Vergleich zur Verwendung eines Motormodells zur Bestimmung der Betriebstemperatur des Elektromotors wird bei dem erfindungsgemäßen Verfahren zudem weniger Rechenleistung benötigt.

Bei dem Elektromotor handelt es sich in diesem Zusammenhang vorzugsweise um einen Asynchronmotor, einen Synchronmotor oder einen Universalmotor. Vorzugsweise ist der Elektromotor ein dreiphasiger oder mehrphasiger Elektromotor, dessen Wicklungsstränge vorzugsweise zu einem Stern geschaltet sind.

Zu den Betriebsparametern des Elektromotors zählen in diesem Zusammenhang insbesondere die Betriebstemperatur und der Wicklungswiderstand des Elektromotors. Weitere Betriebsparameter des Elektromotors können in diesem Zusammenhang auch die aufgenommene Leistung, die abgegebene Leistung, die Drehzahl und dergleichen des Elektromotors sein. Falls mehrere, d.h. zwei, drei oder mehr Betriebsparameter des Elektromotors verwendet werden sollen, so können diese unabhängig voneinander sein oder in irgendeiner Weise zusammenhängen. So nimmt beispielsweise der Wicklungswiderstand mit steigender Betriebstemperatur des Elektromotors üblicherweise zu.

Bei dem Kalibrierergebnis kann es sich in diesem Zusammenhang um jede Art einer mathematischen Verknüpfung handeln, welche geeignet ist, einen Messwert auf den tatsächlichen Wert für den jeweiligen Betriebsparameter zu korrigieren. Vorzugsweise zählen zu dem Kalibrierergebnis in diesem Zusammenhang einfache Korrekturfaktoren, Korrekturformeln, Korrekturtabellen, Korrekturmatrizen und dergleichen, jeweils einzeln oder mehrfach für verschiedene beteiligte Betriebsparameter.

Im Erfassungsschritt (c) soll wenigstens ein Messwert eines Betriebsparameters erfasst werden. Unter dem Begriff "Erfassen" soll dabei jede beliebige Art verstanden werden, den Messwert des jeweiligen Betriebsparameters direkt oder indirekt zu bestimmen. Vorzugsweise wird der Messwert eines Betriebsparameters (z.B. Widerstand) indirekt durch eine Messung von Messwerten anderer Betriebsgrößen (z.B. Strom und Spannung) ermittelt. Alternativ kann ein Betriebsparameter auch direkt gemessen werden.

Im Bestimmungsschritt (d) soll die Betriebstemperatur des Elektromotors anhand des wenigstens einen Messwertes und des Kalibrierergebnisses bestimmt werden. Unter dem Begriff "Bestimmen" soll in diesem Zusammenhang jede Art von Auswertung verstanden werden, mit deren Hilfe aus dem wenigstens einen Messwert die Betriebstemperatur ermittelt werden kann. Dabei handelt es sich vorzugsweise um einfache oder um mehrere Berechnungsschritte. Die Art der Berechnungsschritte hängt dabei nicht zuletzt von der Art des Kalibrierergebnisses und der verwendeten Betriebsparameter ab.

In diesem Zusammenhang müssen die Betriebsparameter, deren Messwerte im Kalibrierschritt (b) kalibriert werden, und die Betriebsparameter, deren Messwerte im Erfassungsschritt (c) erfasst werden, weder in ihren Anzahlen noch in ihren Arten notwendigerweise übereinstimmen. So wird in einer bevorzugten Ausgestaltung der Erfindung die Messwerterfassung von einem oder zwei Betriebsparametern (z.B. Betriebstemperatur und/oder Wicklungswiderstand) kalibriert, aber nur der Messwert eines Betriebsparameters (z.B. Wicklungswiderstand) erfasst.

Das erfindungsgemäße Verfahren zum Bestimmen der Betriebstemperatur eines Elektromotors kann ausschließlich aus den oben angegebenen Schritten (a) bis (d) bestehen oder noch zusätzliche Verfahrensschritte vor, zwischen und/oder nach den oben angegebenen Schritten (a) bis (d) aufweisen.

Der Zuordnungsschritt (a) und der Kalibrierschritt (b) werden in einer Produktionslinie von Elektromotor und Wechselrichter durchgeführt. Zusätzlich ist es auch möglich, diese Schritte während der Betriebsdauer der Komponenten durchzuführen oder zu wiederholen.

In einer bevorzugten Ausgestaltung der Erfindung werden der Erfassungsschritt (c) und/oder der Bestimmungsschritt (d) durch eine Steuereinrichtung des Wechselrichters ausgeführt. Diese Steuereinrichtung des Wechselrichters weist vorzugsweise einen Mikrocontroller auf. Gemäß der Erfindung werden im Kalibrierschritt (b) zunächst ein Referenzwert wenigstens eines Betriebsparameters des Elektromotors gemessen und ein Referenzmesswert wenigstens eines Betriebsparameters des Elektromotors durch den zugeordneten Wechselrichter erfasst und wird dann das Kalibrierergebnis durch einen Vergleich des wenigstens einen Referenzmesswertes mit dem wenigstens einen Referenzwert gewonnen. Das Messen des wenigstens einen Referenzwertes erfolgt vorzugsweise direkt durch eine hochpräzise Messvorrichtung. Das Vergleichen von Referenzwert und Referenzmesswert umfasst in diesem Zusammenhang die Berechnung von einfachen Verhältnissen dieser Werte, aber auch komplexere Berechnungen von Korrekturfaktoren, Korrekturmatrizen und dergleichen. Gemäß der Erfindung wird im Kalibrierschritt (b) die Messwerterfassung eines Wicklungswiderstandes des Elektromotors kalibriert. Zu diesem Zweck werden vorzugsweise der Wicklungswiderstand und/oder die Betriebstemperatur des Elektromotors gemessen, um entsprechende Kalibrierergebnisse zu gewinnen.

Vor dem Durchführen des Kalibrierschrittes (b) wird der Elektromotor vorzugsweise auf die Umgebungstemperatur stabilisiert, um eine Verfälschung der Messergebnisse zu vermeiden. Gemäß der Erfindung wird die Betriebstemperatur des Elektromotors im Bestimmungsschritt (d) durch eine Berechnung aus einem anhand des Kalibrierergebnisses korrigierten Messwert des Wicklungswiderstandes des Elektromotors anhand des Kalibrierergebnisses bestimmt.

Das oben beschriebene Verfahren der Erfindung zum Bestimmen einer Betriebstemperatur eines Elektromotors wird vorzugsweise in einem Verfahren zum Ansteuern eines Wechselrichters, welcher einen Elektromotor speist, in Abhängigkeit von einer Betriebstemperatur des Elektromotors eingesetzt. Zur Erzielung des Überhitzungsschutzes des Elektromotors wird der Wechselrichter vorzugsweise so angesteuert, dass die Betriebstemperatur des Elektromotors einen vorgegebenen Grenzwert nicht übersteigt. Zu diesem Zweck wird der Wechselrichter vorzugsweise so angesteuert, dass der Elektromotor abgeschaltet oder seine Drehzahl reduziert wird, wenn die Betriebstemperatur den vorgegebenen Grenzwert erreicht oder überschreitet.

Gegenstand der Erfindung ist ferner ein elektrisches Haushaltsgerät mit einem Antriebsmotor, welcher über einen Wechselrichter gespeist wird, und einer Steuervorrichtung, welche ausgebildet ist zum Durchführen des oben beschriebenen Verfahrens der Erfindung.

Bei dem Haushaltsgerät handelt es sich vorzugsweise um ein Wäschebehandlungsgerät (Waschmaschine, Wäschetrockner, etc.), eine Spülmaschine oder dergleichen.

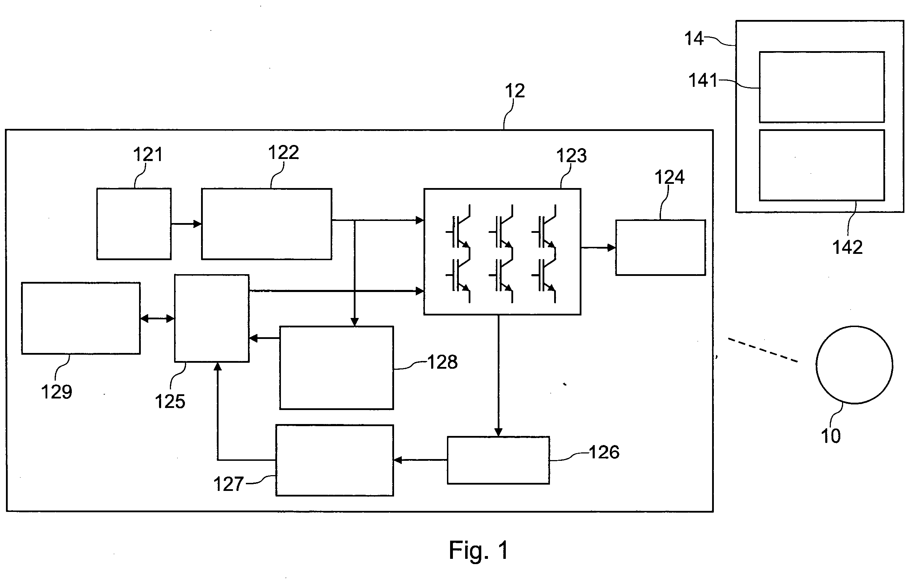

Obige sowie weitere Merkmale und Vorteile der Erfindung werden aus der nachfolgenden Beschreibung bevorzugter, nicht-einschränkender Ausführungsbeispiele unter Bezugnahme auf die beiliegende Zeichnung besser verständlich. Darin zeigt die einzige Figur 1 eine schematische Darstellung eines Elektromotors mit zugeordnetem Wechselrichter gemäß der vorliegenden Erfindung.

In Figur 1 ist mit der Bezugsziffer 10 ein Elektromotor bezeichnet. Bei diesem Elektromotor handelt es sich beispielsweise um einen Antriebsmotor eines elektrischen Haushaltsgerätes, zum Beispiel einen Antriebsmotor einer Wäschetrommel eines Wäschebehandlungsgerätes (z.B. Waschmaschine, Wäschetrockner) oder einer Wasserpumpe einer Spülmaschine.

Dem Elektromotor 10 ist ein Wechselrichter 12 zugeordnet, welcher den Elektromotor 10 speist. Diese Zuordnung zwischen Elektromotor 10 und Wechselrichter 12 erfolgt in der Produktionslinie der beiden Komponenten 10, 12 und bleibt über die Betriebs- bzw. Lebensdauer dieser Komponenten bestehen. Mit anderen Worten wird ein festes, dauerhaftes Paar (im organisatorischen Sinne) aus Elektromotor 10 und Wechselrichter 12 gebildet.

Der Wechselrichter 12 weist in diesem Ausführungsbeispiel einen Netzanschluss 121, einen Gleichrichter 122, ein Leistungsmodul 123, einen Ausgangsanschluss 124, eine Steuereinrichtung 125, eine Strommessvorrichtung 126, einen Messverstärker 127, eine Spannungsmessvorrichtung 128 und eine Kommunikationsschnittstelle 129 auf. In der Produktionslinie 14 von Elektromotor 10 und Wechselrichter 12 sind zudem ein Temperaturmessgerät 141 und ein Widerstandsmessgerät 142 (als Messvorrichtung der Erfindung) vorgesehen.

Der Gleichrichter 122 enthält eine Gleichrichterschaltung zum Umsetzen der am Netzanschluss 121 anliegenden Wechselspannung in eine Gleichspannung und einen Zwischenkreis.

Das Leistungsmodul 123 ist auf den Antriebsmotor 10 abgestimmt. Im Fall eines beispielsweise dreiphasigen Antriebsmotors 10 enthält das Leistungsmodul 123 zum Beispiel drei Halbbrücken, die jeweils zwei Leistungshalbleiterschalter und einen zugehörigen Treiber aufweisen. Über den Ausgangsanschluss 124 speist der Wechselrichter 12 in diesem Fall beispielsweise die drei im Stern geschalteten Wicklungen des Antriebsmotors 10.

Die Strommessvorrichtung 126 ist ausgebildet, um einen Motorstrom einer Wicklung des Antriebsmotors 10 oder die Motorströme von zwei oder drei Wicklungen des Antriebsmotors 10 zu erfassen. Die erfassten Stromwerte werden der Steuereinrichtung 125 des Wechselrichters 12 über den Messverstärker 127 zugeführt.

Die Spannungsmessvorrichtung 128 ist ausgebildet, um die am Leistungsmodul 123 anliegende Gleichspannung des Zwischenkreises des Gleichrichters 122 zu erfassen. Der erfasste Spannungswert wird ebenfalls der Steuereinrichtung 125 des Wechselrichters 12 zugeführt.

Die Steuereinrichtung 125 des Wechselrichters 12 weist zum Beispiel einen Mikrocontroller auf, der ausgebildet und programmiert ist, um aus den von der Strommessvorrichtung 126 und der Spannungsmessvorrichtung 128 zugeführten Strom- und Spannungswerten einen Widerstandswert einer oder mehrerer Wicklungen des Antriebsmotors 10 zu berechnen. Die Strommessvorrichtung 126, der Messverstärker 127 und die Spannungsmessvorrichtung 128 bilden zusammen mit dem Mikrocontroller 125 die Erfassungsvorrichtung der Erfindung. Die Steuereinrichtung 125 enthält außerdem einen Speicher zum Speichern eines nachfolgend erläuterten Kalibrierergebnisses.

Die Kommunikationsschnittstelle 129 des Wechselrichters 12 dient dem Austausch von Daten- und Steuersignalen zwischen der Steuereinrichtung 125 des Wechselrichters 12 und einem externen Gerät, zum Beispiel der Hauptsteuerung des Haushaltsgerätes. Darüber hinaus steht der Wechselrichter 12 über diese Kommunikationsschnittstelle 129 auch mit der Produktionslinie 14 in Verbindung. Die Produktionslinie 14 kann so beispielsweise die von den Messgeräten 141, 142 gemessenen Referenzwerte an die Steuereinrichtung 125 des Wechselrichters 12 übertragen.

Die Produktionslinie 14 von Elektromotor 10 und Wechselrichter 12 weist eine hochgenaue Temperaturmessvorrichtung (z.B. Thermometer) 141 zum Messen der Betriebstemperatur (z.B. Wicklungstemperatur) des Elektromotors 10 und optional auch eine hochgenaue Widerstandsmessvorrichtung (z.B. Ohmmeter) 142 zum Messen des Wicklungswiderstandes oder der Wicklungswiderstände des Elektromotors 10 auf.

Es sei vorsorglich darauf hingewiesen, dass Elektromotor 10, Wechselrichter 12 und Produktionslinie 14 in Figur 1 jeweils nur stark vereinfacht dargestellt sind. Diese Komponenten können selbstverständlich weitere Bauteile, Vorrichtungen, Verbindungen, etc. aufweisen.

Für den Überhitzungsschutz des Elektromotors 10 während seines Betriebes bzw. bestimmungsgemäßen Einsatzes muss seine Betriebstemperatur (z.B. Wicklungstemperatur) T überwacht werden. Der Wechselrichter 12 speist den Elektromotor 10 derart, dass seine Betriebstemperatur T einen vorgegebenen Grenzwert nicht übersteigt. Beispielsweise kann der Elektromotor 10 abgeschaltet oder seine Drehzahl reduziert werden, wenn die Betriebstemperatur T den vorgegebenen Grenzwert erreicht oder überschreitet.

Zu diesem Zweck wird die Betriebstemperatur des Elektromotors 10 während seines Betriebes überwacht. Das hierbei eingesetzte Verfahren zum Bestimmen der Betriebstemperatur T des Elektromotors 10 basiert auf einer Messung eines Wicklungswiderstandes R des Elektromotors 10 durch den Wechselrichter 12. Aus dem Wicklungswiderstand R lässt sich die Betriebs- bzw. Wicklungstemperatur T des Elektromotors 10 mit Hilfe der folgenden Formel bestimmen:

$$T = T_0 + \frac{1}{\alpha}\left(\frac{R}{R_0} - 1\right) \qquad \dots \quad (1)$$

mit

T: Betriebs- bzw. Wicklungstemperatur
$T_0$: Referenztemperatur
R: Wicklungswiderstand bei T
$R_0$: Referenzwiderstand bei $T_0$ (z.B. Kaltwiderstand)
$\alpha$: Temperaturkoeffizient des Wicklungsmaterials

Um die Betriebstemperatur T des Elektromotors 10 im Betrieb mit hoher Genauigkeit bestimmen zu können, werden bereits in der Produktionslinie, d.h. während der Fertigung, ein Elektromotor 10 und ein Wechselrichter 12 einander zugeordnet. Dieses Paar aus Elektromotor 10 und Wechselrichter 12 bleibt dann dauerhaft, bevorzugt über die gesamte Betriebs- bzw. Lebensdauer der beiden Komponenten zusammen. Dieses Zusammenbleiben bedeutet allgemein eine dauerhafte, organisatorische Zuordnung, nicht notwendigerweise auch eine dauerhafte mechanische und/oder elektrische Verbindung zwischen den beiden Komponenten.
Es wird nun ein erstes Ausführungsbeispiel eines erfindungsgemäßen Verfahrens zum Bestimmen der Betriebstemperatur des Elektromotors näher beschrieben.
Wie bereits oben erwähnt wird einem Elektromotor 10 zunächst ein Wechselrichter 12 zugeordnet. Dies geschieht bevorzugt bereits in der Produktionslinie, zum Beispiel am Ende des Fertigungsprozesses.
Bevor der Kalibrierprozess des Wechselrichters 12 beginnt, sollte die Temperatur des Elektromotors 10 sich auf die Umgebungstemperatur der Produktionslinie 14 stabilisiert haben, um verfälschte Mess- und Kalibrierergebnisse zu vermeiden.
In einem ersten Schritt wird die Widerstandsmessvorrichtung 142 der Produktionslinie 14 an den Elektromotor 10 angeschlossen. Die Widerstandsmessvorrichtung 142 misst einen Referenzwert Rref des Wicklungswiderstandes des Elektromotors 10. Dieser Referenzwert Rref wird von der Produktionslinie 14 an den Wechselrichter 12 über dessen Kommunikationsschnittstelle 129 übertragen. Dieser Referenzwert wird in der Steuervorrichtung 125 des Wechselrichters 12 dauerhaft gespeichert.
In einem zweiten Schritt wird der Elektromotor 10 mit dem Ausgangsanschluss 124 des Wechselrichters 12 verbunden. Die Produktionslinie 14 steuert den Wechselrichter 12 über dessen Kommunikationsschnittstelle 129 an, eine Widerstandsmessung durchzuführen.
Zu dieser Widerstandsmessung misst die Strommessvorrichtung 126 einen Strom I durch eine Wicklung des Elektromotors 10 und misst die Spannungsmessvorrichtung 128 die Zwischenkreisspannung U des Gleichrichters 122. Aus diesen ggf. noch verstärkten Messwerten I, U berechnet die Steuervorrichtung 125 des Wechselrichters 12 einen Referenzmesswert Rrefm = U / I des Wicklungswiderstandes des Elektromotors 10.
In einem dritten Schritt führt der Wechselrichter 12 eine Selbstkalibrierung durch. Die Steuervorrichtung 125 des Wechselrichters ermittelt basierend auf dem Referenzwert Rref der Widerstandsmessvorrichtung 142 der Produktionslinie 14 und dem Referenzmesswert Rrefm des Wechselrichters 12 ein Kalibrierergebnis K. Dieses Kalibrierergebnis K wird in der Steuervorrichtung 125 des Wechselrichters 12 dauerhaft gespeichert. Das Kalibrierergebnis K wird im einfachsten Fall durch das Verhältnis Rref / Rrefm bestimmt.
Nun kann die Betriebstemperatur T des Elektromotors 10 mit dem diesem zugeordneten und auf diesen abgestimmten Wechselrichter 12 zu einem beliebigen Zeitpunkt durch eine Erfassung des Wicklungswiderstandes des Elektromotors 10 durch den Wechselrichter 12 mit großer Genauigkeit wie folgt bestimmt werden.
Ein Messwert Rm des Wicklungswiderstandes des Elektromotors 10 wird auch im Betrieb ähnlich wie im obigen Kalibrierprozess durch den Wechselrichter 12 aus dem Strom I durch die Wicklung und der Zwischenkreisspannung U, welche mit Hilfe der Strommessvorrichtung 126, 127 bzw. der Spannungsmessvorrichtung 128 des Wechselrichters 12 erfasst werden, berechnet.
Anschließend wird dieser Messwert Rm des Wicklungswiderstandes des Elektromotors anhand des zuvor ermittelten und in der Steuereinrichtung 125 gespeicherten Kalibrierergebnisses K korrigiert. Beispielsweise ergibt sich der Wert R des Wicklungswiderstandes des Elektromotors aus R = K $\times$ Rm.

Aus dem so ermittelten Wert R des Wicklungswiderstandes kann die Steuereinrichtung 125 des Wechselrichters 12 dann mit der obigen Gleichung (1) die Betriebstemperatur T des Elektromotors 10 berechnen. Aufgrund der vorgenommenen Korrektur des durch den Wechselrichter 12 erfassten Messwertes Rm des Wicklungswiderstandes anhand des in der Produktionslinie ermittelten Kalibrierergebnisses K kann die Betriebstemperatur T des Elektromotors 10 mit sehr hoher Genauigkeit durchgeführt werden. Durch die feste Zuordnung zwischen Elektromotor 10 und Wechselrichter 12 und die Kalibrierung der Messwerterfassung des Wechselrichters 12 kann insbesondere ein Einfluss von Fertigungstoleranzen der beteiligten Komponenten 10, 12 und ihrer Bestandteile auf das Bestimmungsergebnis der Betriebstemperatur reduziert oder sogar minimiert bzw. vermieden werden.

Es wird nun ein zweites Ausführungsbeispiel eines erfindungsgemäßen Verfahrens zum Bestimmen der Betriebstemperatur des Elektromotors näher beschrieben.

Wie im ersten Ausführungsbeispiel wird einem Elektromotor 10 zunächst ein Wechselrichter 12 zugeordnet. Dies geschieht bevorzugt bereits in der Produktionslinie, zum Beispiel am Ende des Fertigungsprozesses.

Bevor der Kalibrierprozess des Wechselrichters 12 beginnt, sollte die Temperatur des Elektromotors 10 sich auf die Umgebungstemperatur der Produktionslinie 14 stabilisiert haben, um verfälschte Mess- und Kalibrierergebnisse zu vermeiden.

In einem ersten Schritt werden die Temperaturmessvorrichtung 141 und die Widerstandsmessvorrichtung 142 der Produktionslinie 14 an den Elektromotor 10 angeschlossen. Die Temperaturmessvorrichtung 141 misst einen Referenzwert Tref des Betriebs- bzw. Wicklungstemperatur des Elektromotors 10 und die Widerstandsmessvorrichtung 142 misst einen Referenzwert Rref des Wicklungswiderstandes des Elektromotors 10. Diese Referenzwerte Tref, Rref werden von der Produktionslinie 14 an den Wechselrichter 12 über dessen Kommunikationsschnittstelle 129 übertragen. Diese Referenzwerte werden in der Steuervorrichtung 125 des Wechselrichters 12 dauerhaft gespeichert.

In einem zweiten Schritt wird der Elektromotor 10 mit dem Ausgangsanschluss 124 des Wechselrichters 12 verbunden. Die Produktionslinie 14 steuert den Wechselrichter 12 über dessen Kommunikationsschnittstelle 129 an, eine Widerstandsmessung durchzuführen.

Wie im ersten Ausführungsbeispiel messen die Strommessvorrichtung 126 zu dieser Widerstandsmessung einen Strom I durch eine Wicklung des Elektromotors 10 und die Spannungsmessvorrichtung 128 eine Zwischenkreisspannung U des Gleichrichters 122. Aus diesen ggf. noch verstärkten Messwerten I, U berechnet die Steuervorrichtung 125 des Wechselrichters 12 einen Referenzmesswert Rrefm = U / I des Wicklungswiderstandes des Elektromotors 10. Zusätzlich berechnet die Steuervorrichtung 125 in diesem Ausführungsbeispiel aus diesem Referenzmesswert Rrefm des Wicklungswiderstandes mit Hilfe der obigen Gleichung (1) einen Referenzmesswert Trefm für die Betriebstemperatur des Elektromotors 10.

In einem dritten Schritt führt der Wechselrichter 12 eine Selbstkalibrierung durch. Die Steuervorrichtung 125 des Wechselrichters ermittelt basierend auf dem Referenzwert Rref der Widerstandsmessvorrichtung 142 der Produktionslinie 14 und dem Referenzmesswert Rrefm des Wechselrichters 12 ein erstes Kalibrierergebnis Kr. Dieses erste Kalibrierergebnis Kr wird in der Steuervorrichtung 125 des Wechselrichters 12 dauerhaft gespeichert. Das erste Kalibrierergebnis Kr wird im einfachsten Fall durch das Verhältnis Rref / Rrefm bestimmt.

Zusätzlich ermittelt die Steuervorrichtung 125 des Wechselrichters 12 in diesem Ausführungsbeispiel basierend auf dem Referenzwert Tref der Temperaturmessvorrichtung 141 der Produktionslinie 14 und dem berechneten Referenzmesswert Trefm des Wechselrichters 12 ein zweites Kalibrierergebnis Kt. Dieses zweite Kalibrierergebnis Kt wird ebenfalls in der Steuervorrichtung 125 des Wechselrichters 12 dauerhaft gespeichert. Das zweite Kalibrierergebnis Kt wird im einfachsten Fall durch das Verhältnis Tref / Trefm bestimmt.

Nun kann die Betriebstemperatur T des Elektromotors 10 mit dem diesem zugeordneten und auf diesen abgestimmten Wechselrichter 12 zu einem beliebigen Zeitpunkt durch eine Erfassung des Wicklungswiderstandes des Elektromotors 10 durch den Wechselrichter 12 mit großer Genauigkeit wie folgt bestimmt werden.

Auch im zweiten Ausführungsbeispiel wird ein Messwert Rm des Wicklungswiderstandes des Elektromotors 10 durch den Wechselrichter 12 aus dem Strom I durch die Wicklung und der Zwischenkreisspannung U, welche mit Hilfe der Strommessvorrichtung 126, 127 bzw. der Spannungsmessvorrichtung 128 des Wechselrichters 12 erfasst werden, berechnet.

Anschließend wird dieser Messwert Rm des Wicklungswiderstandes des Elektromotors anhand des zuvor ermittelten und in der Steuereinrichtung 125 gespeicherten ersten Kalibrierergebnisses Kr korrigiert. Beispielsweise ergibt sich der Wert R des Wicklungswiderstandes des Elektromotors aus R = Kr $\times$ Rm.

Aus dem so ermittelten Wert R des Wicklungswiderstandes kann die Steuereinrichtung 125 des Wechselrichters 12 dann mit der obigen Gleichung (1) einen Wert Tm für die Betriebstemperatur des Elektromotors 10 berechnen. Im Unterschied zum obigen ersten Ausführungsbeispiel wird in diesem Ausführungsbeispiel nun auch noch der ermittelte Wert Tm der Betriebstemperatur anhand des zuvor ermittelten und in der Steuereinrichtung 125 gespeicherten zweiten Kalibrierergebnisses Kt korrigiert. Beispielsweise ergibt sich der Wert T der Betriebstemperatur des Elektromotors aus T = Kt × Tm.

Aufgrund der vorgenommenen Korrekturen des durch den Wechselrichter 12 erfassten Messwertes Rm des Wicklungswiderstandes und des ermittelten Wertes Tm der Betriebstemperatur anhand des in der Produktionslinie ermittelten Kalibrierergebnisses Kr, Kt kann die Betriebstemperatur T des Elektromotors 10 mit sehr hoher Genauigkeit durchgeführt werden.

Es wird nun ein Beispiel eines Verfahrens zum Bestimmen der Betriebstemperatur des Elektromotors näher beschrieben. Wie in den obigen Ausführungsbeispielen wird einem Elektromotor 10 zunächst ein Wechselrichter 12 zugeordnet. Dies geschieht bevorzugt bereits in der Produktionslinie, zum Beispiel am Ende des Fertigungsprozesses.

Bevor der Kalibrierprozess des Wechselrichters 12 beginnt, sollte sich auch hier die Temperatur des Elektromotors 10 auf die Umgebungstemperatur der Produktionslinie 14 stabilisiert haben, um verfälschte Mess- und Kalibrierergebnisse zu vermeiden.

In einem ersten Schritt wird die Temperaturmessvorrichtung 141 der Produktionslinie 14 an den Elektromotor 10 angeschlossen. Die Temperaturmessvorrichtung 141 misst einen Referenzwert Tref der Betriebs- bzw. Wicklungstemperatur des Elektromotors 10. Dieser Referenzwert Tref wird von der Produktionslinie 14 an den Wechselrichter 12 über dessen Kommunikationsschnittstelle 129 übertragen. Dieser Referenzwert wird in der Steuervorrichtung 125 des Wechselrichters 12 dauerhaft gespeichert.

In einem zweiten Schritt wird der Elektromotor 10 mit dem Ausgangsanschluss 124 des Wechselrichters 12 verbunden. Die Produktionslinie 14 steuert den Wechselrichter 12 über dessen Kommunikationsschnittstelle 129 nun an, eine Widerstandsmessung durchzuführen.

Wie in den obigen Ausführungsbeispielen messen die Strommessvorrichtung 126 zu dieser Widerstandsmessung einen Strom I durch eine Wicklung des Elektromotors 10 und die Spannungsmessvorrichtung 128 eine Zwischenkreisspannung U des Gleichrichters 122. Aus diesen ggf. noch verstärkten Messwerten I, U berechnet die Steuervorrichtung 125 des Wechselrichters 12 einen Referenzmesswert Rrefm = U / I des Wicklungswiderstandes des Elektromotors 10. Zusätzlich berechnet die Steuervorrichtung 125 in diesem Ausführungsbeispiel aus diesem Referenzmesswert Rrefm des Wicklungswiderstandes mit Hilfe der obigen Gleichung (1) einen Referenzmesswert Trefm für die Betriebstemperatur des Elektromotors 10.

In einem dritten Schritt führt der Wechselrichter 12 eine Selbstkalibrierung durch. Die Steuervorrichtung 125 des Wechselrichters ermittelt basierend auf dem Referenzwert Tref der Temperaturmessvorrichtung 141 der Produktionslinie 14 und dem berechneten Referenzmesswert Trefm des Wechselrichters 12 ein Kalibrierergebnis K. Dieses Kalibrierergebnis K wird in der Steuervorrichtung 125 des Wechselrichters 12 dauerhaft gespeichert. Das Kalibrierergebnis K wird im einfachsten Fall durch das Verhältnis Tref / Trefm bestimmt.

Nun kann die Betriebstemperatur T des Elektromotors 10 mit dem diesem zugeordneten und auf diesen abgestimmten Wechselrichter 12 zu einem beliebigen Zeitpunkt durch eine Erfassung des Wicklungswiderstandes des Elektromotors 10 durch den Wechselrichter 12 mit großer Genauigkeit wie folgt bestimmt werden.

Auch in diesem Beispiel wird ein Messwert Rm des Wicklungswiderstandes des Elektromotors 10 durch den Wechselrichter 12 aus dem Strom I durch die Wicklung und der Zwischenkreisspannung U, welche mit Hilfe der Strommessvorrichtung 126, 127 bzw. der Spannungsmessvorrichtung 128 des Wechselrichters 12 erfasst werden, berechnet.

Aus diesem Messwert Rm des Wicklungswiderstandes berechnet die Steuereinrichtung 125 des Wechselrichters 12 dann mit der obigen Gleichung (1) einen Messwert Tm für die Betriebstemperatur des Elektromotors 10. Dieser Messwert Tm wird anschließend anhand des zuvor ermittelten und in der Steuereinrichtung 125 gespeicherten Kalibrierergebnisses K korrigiert. Beispielsweise ergibt sich der Wert T der Betriebstemperatur des Elektromotors aus T = K × Tm.

Aufgrund der vorgenommenen Korrektur des durch den Wechselrichter 12 berechneten Messwertes Tm der Betriebstemperatur anhand des in der Produktionslinie ermittelten Kalibrierergebnisses K kann die Betriebstemperatur T des Elektromotors 10 mit sehr hoher Genauigkeit durchgeführt werden.

Es wird nun ein weiteres Beispiel eines Verfahrens zum Bestimmen der Betriebstemperatur des Elektromotors näher beschrieben.

Wie im obigen Beispiel wird in diesem Beispiel für die Selbstkalibrierung des Wechselrichters 12 nur die Betriebstemperatur des Elektromotors 10 verwendet. Es wird dabei angenommen, dass der Wechselrichter 12 bei der Widerstandsmessung lediglich einen Verstärkungsfehler ε aufweist, d.h. der Messwert Rm des Wicklungswiderstandes und der tatsächliche Wert R des Wicklungswiderstandes des Elektromotors 10 für eine beliebige Temperatur wie folgt zusammenhängen:

$$Rm = \varepsilon \times R \qquad\qquad \dots \ (2)$$

In Wirklichkeit zeigt die Widerstandsmessung aber einen zusätzlichen Offset. Dieser Offset liegt bei üblichen Fertigungstoleranzen der Komponenten in der Größenordnung von etwa 10 mΩ und wird deshalb vernachlässigt.

Die Temperaturabhängigkeit des Wicklungswiderstandes kann durch die folgende Gleichung ausgedrückt werden:

$$Rm = R'_0 \left[ 1 + \alpha (T - T_0) \right] \qquad \qquad \cdots \quad (3)$$

wobei $R'_0$ den durch Fertigungstoleranzen beeinflussten Referenzwiderstandswert $R_0$ bei der Referenztemperatur $T_0$ bezeichnet.

Durch Kombinieren der Gleichungen (1), (2) und (3) erhält man für die vom Wechselrichter 12 ermittelte Betriebstemperatur Tm:

$$Tm = \varepsilon \frac{R'_0}{R_0} T - \left( \varepsilon \frac{R'_0}{R_0} - 1 \right) \left( T_0 - \frac{1}{\alpha} \right) \qquad \cdots \quad (4)$$

Man kann erkennen, dass der Messwert Tm der Betriebstemperatur in Gleichung (4) von einem Verstärkungsfehler und einem Offsetfehler beeinflusst werden, die nicht vernachlässigbar sind. Für den Kalibrierprozess kann, abgeleitet aus Gleichung (4), der folgende Kalibrierfaktor K verwendet werden:

$$K = \varepsilon \frac{R'_0}{R_0} = \frac{Tm + \frac{1}{\alpha} - T_0}{T + \frac{1}{\alpha} - T_0} \qquad \cdots \quad (5)$$

Wie in den obigen Ausführungsbeispielen wird einem Elektromotor 10 zunächst ein Wechselrichter 12 zugeordnet. Dies geschieht bevorzugt bereits in der Produktionslinie, zum Beispiel am Ende des Fertigungsprozesses.

Bevor der Kalibrierprozess des Wechselrichters 12 beginnt, sollte sich auch hier die Temperatur des Elektromotors 10 auf die Umgebungstemperatur der Produktionslinie 14 stabilisiert haben, um verfälschte Mess- und Kalibrierergebnisse zu vermeiden.

In einem ersten Schritt wird die Temperaturmessvorrichtung 141 der Produktionslinie 14 an den Elektromotor 10 angeschlossen. Wie im obigen Beispiel misst die Temperaturmessvorrichtung 141 nun einen Referenzwert Tref der Betriebs- bzw. Wicklungstemperatur des Elektromotors 10.

Dieser Referenzwert Tref wird von der Produktionslinie 14 an den Wechselrichter 12 über dessen Kommunikationsschnittstelle 129 übertragen. Dieser Referenzwert wird in der Steuervorrichtung 125 des Wechselrichters 12 dauerhaft gespeichert.

In einem zweiten Schritt wird der Elektromotor 10 mit dem Ausgangsanschluss 124 des Wechselrichters 12 verbunden. Die Produktionslinie 14 steuert den Wechselrichter 12 über dessen Kommunikationsschnittstelle 129 nun an, eine Widerstandsmessung durchzuführen.

Wie in den obigen Ausführungsbeispielen messen die Strommessvorrichtung 126 zu dieser Widerstandsmessung einen Strom I durch eine Wicklung des Elektromotors 10 und die Spannungsmessvorrichtung 128 eine Zwischenkreisspannung U des Gleichrichters 122. Aus diesen ggf. noch verstärkten Messwerten I, U berechnet die Steuervorrichtung 125 des Wechselrichters 12 einen Referenzmesswert Rrefm = U / I des Wicklungswiderstandes des Elektromotors 10. Zusätzlich berechnet die Steuervorrichtung 125 in diesem Beispiel aus diesem Referenzmesswert Rrefm des Wicklungswiderstandes mit Hilfe der obigen Gleichung (1) einen Referenzmesswert Trefm für die Betriebstemperatur des Elektromotors 10.

In einem dritten Schritt führt der Wechselrichter 12 eine Selbstkalibrierung durch. Die Steuervorrichtung 125 des Wechselrichters ermittelt basierend auf dem Referenzwert Tref der Temperaturmessvorrichtung 141 der Produktionslinie 14 und dem berechneten Referenzmesswert Trefm des Wechselrichters 12 ein Kalibrierergebnis K, welches in der Steuervorrichtung 125 des Wechselrichters 12 dauerhaft gespeichert wird. Das Kalibrierergebnis K wird in diesem Ausführungsbeispiel basierend auf der obigen Gleichung (5) wie folgt berechnet:

$$K = \frac{Trefm + \dfrac{1}{\alpha} - T_0}{Tref + \dfrac{1}{\alpha} - T_0} \qquad \dots \quad (6)$$

Nun kann die Betriebstemperatur T des Elektromotors 10 mit dem diesem zugeordneten und auf diesen abgestimmten Wechselrichter 12 zu einem beliebigen Zeitpunkt durch eine Erfassung des Wicklungswiderstandes des Elektromotors 10 durch den Wechselrichter 12 mit großer Genauigkeit wie folgt bestimmt werden.

Auch in diesem Beispiel wird wieder ein Messwert Rm des Wicklungswiderstandes des Elektromotors 10 durch den Wechselrichter 12 aus dem Strom I durch die Wicklung und der Zwischenkreisspannung U, welche mit Hilfe der Strommessvorrichtung 126, 127 bzw. der Spannungsmessvorrichtung 128 des Wechselrichters 12 erfasst werden, berechnet.

Aus diesem Messwert Rm des Wicklungswiderstandes berechnet die Steuereinrichtung 125 des Wechselrichters 12 dann mit der obigen Gleichung (1) einen Messwert Tm für die Betriebstemperatur des Elektromotors 10. Dieser Messwert Tm wird anschließend anhand des zuvor ermittelten und in der Steuereinrichtung 125 gespeicherten Kalibrierergebnisses K korrigiert. Der Wert T der Betriebstemperatur des Elektromotors 10 ergibt sich in diesem Ausführungsbeispiel dann aus:

$$T = \left[ Tm - (K-1)\left(\frac{1}{\alpha} - T_0\right) \right]\frac{1}{K} \qquad \dots \quad (7)$$

Aufgrund der vorgenommenen Korrektur des durch den Wechselrichter 12 berechneten Messwertes Tm der Betriebstemperatur anhand des in der Produktionslinie unter Berücksichtigung von Verstärkungs- und Offsetfehlern ermittelten Kalibrierergebnisses K kann die Betriebstemperatur T des Elektromotors 10 mit sehr hoher Genauigkeit durchgeführt werden. In den Beispielen wird im Kalibrierprozess auf eine Messung des Wicklungswiderstandes durch eine Widerstandsmessvorrichtung 142 der Produktionslinie 14 verzichtet. Hierdurch können die Fertigungskosten in der Produktionslinie 14 verringert werden.

**Patentansprüche**

1. Verfahren zum Bestimmen einer Betriebstemperatur eines Elektromotors, welcher über einen Wechselrichter gespeist wird, mit den Schritten:

   (a) Zuordnen eines Wechselrichters (12) zu einem Elektromotor (10);
   (b) Kalibrieren (K) einer Messwerterfassung wenigstens eines Betriebsparameters des Elektromotors (10) durch den zugeordneten Wechselrichter (12);
   (c) Erfassen wenigstens eines Messwertes (Rm) des wenigstens einen Betriebsparameters des Elektromotors (10) durch den zugeordneten Wechselrichter (12); und
   (d) Bestimmen der Betriebstemperatur (T) des Elektromotors (10) anhand des wenigstens einen Messwertes (Rm) und des Kalibrierergebnisses (K) des zugeordneten Wechselrichters (12),

   **dadurch gekennzeichnet, dass**
   der Zuordnungsschritt (a) und der Kalibrierschritt (b) in einer ein Widerstandsmessgerät (142) aufweisenden Produktionslinie (14) von Elektromotor (10) und Wechselrichter (12) durchgeführt werden, dass im Kalibrierschritt (b) ein Referenzwert (Rref) des wenigstens einen Betriebsparameters des Elektromotors (10) gemessen wird, ein Referenzmesswert (Rrefm) des wenigstens einen Betriebsparameters des Elektromotors (10) durch den zugeordneten Wechselrichter (12) erfasst wird, und das Kalibrierergebnis (K) durch einen Vergleich des wenigstens einen Referenzmesswertes (Rrefm) mit dem wenigstens einen Referenzwert (Rref) gewonnen wird, wobei als Referenzwert (Rref) und als Referenzmesswert (Rrefm) jeweils ein Wicklungswiderstand des Elektromotors (10) herangezogen wird, und dass die Betriebstemperatur (T) des Elektromotors (10) im Bestimmungsschritt (d) durch eine Berechnung aus einem anhand des Kalibrierergebnisses (K) korrigierten Messwert (Rm) des Wicklungswiderstandes des Elektromotors (10) bestimmt wird.

2. Verfahren nach Anspruch 1,

**dadurch gekennzeichnet, dass**
der Erfassungsschritt (c) und/oder der Bestimmungsschritt (d) durch eine Steuereinrichtung (125) des Wechselrichters (12) ausgeführt werden.

3. Verfahren nach einem der Ansprüche 1 bis 2,
**dadurch gekennzeichnet, dass**
die Betriebstemperatur (T) des Elektromotors (10) im Bestimmungsschritt (d) zusätzlich durch eine Korrektur des aus dem Messwert (Rm) des Wicklungswiderstandes berechneten Messwertes (Tm) der Betriebstemperatur des Elektromotors (10) anhand des Kalibrierergebnisses (K) bestimmt wird.

4. Verfahren zum Ansteuern eines Wechselrichters (12), welcher einen Elektromotor (10) speist, in Abhängigkeit von einer Betriebstemperatur (T) des Elektromotors (10), wobei die Betriebstemperatur (T) des Elektromotors (10) gemäß einem Verfahren nach einem der Ansprüche 1 bis 3 bestimmt wird.

5. Elektrisches Haushaltsgerät, mit einem Elektromotor (10), welcher über einen Wechselrichter (12) gespeist wird, und einer Steuervorrichtung, welche ausgebildet ist zum Durchführen eines Verfahrens nach einem der Ansprüche 1 bis 4.

**Claims**

1. Method for determining an operating temperature of an electric motor, which is fed via an inverter, comprising the steps of:

    (a) assigning an inverter (12) to an electric motor (10) ;
    (b) calibrating (K) a measurement value acquisition of at least one operating parameter of the electric motor (10) by the assigned inverter (12);
    (c) acquiring at least one measurement value (Rm) of the at least one operating parameter of the electric motor (10) by the assigned inverter (12); and
    (d) determining the operating temperature (T) of the electric motor (10) on the basis of the at least one measurement value (Rm) and the calibration result (K) of the assigned inverter (12),

    **characterized in that**
    the assignment step (a) and the calibration step (b) are carried out on a production line (14) of the electric motor (10) and the inverter (12), said production line having a resistance measurement device (142),
    **in that**, in the calibration step (b), a reference value (Rref) of the at least one operating parameter of the electric motor (10) is measured, a reference measurement value (Rrefm) of the at least one operating parameter of the electric motor (10) is acquired by the assigned inverter (12) and the calibration result (K) is obtained by a comparison of the at least one reference measurement value (Rrefm) with the at least one reference value (Rref), wherein a winding resistance of the electric motor (10) is used in each case as the reference value (Rref) and as the reference measurement value (Rrefm), and **in that**, in the determination step (d), the operating temperature (T) of the electric motor (10) is determined by a calculation from a measurement value (Rm) of the winding resistance of the electric motor (10), which is corrected on the basis of the calibration result (K).

2. Method according to Claim 1, **characterized in that** the acquisition step (c) and/or the determination step (d) are performed by a control device (125) of the inverter (12).

3. Method according to one of Claims 1 to 2, **characterized in that**, in the determination step (d), the operating temperature (T) of the electric motor (10) is also determined by a correction of the measurement value (Tm) of the operating temperature of the electric motor (10), which is calculated from the measurement value (Rm) of the winding resistance, using the calibration result (K).

4. Method for actuating an inverter (12), which feeds an electric motor (10), depending on an operating temperature (T) of the electric motor (10), wherein the operating temperature (T) of the electric motor (10) is determined according to a method according to one of Claims 1 to 3.

5. Electrical household appliance, comprising an electric motor (10), which is fed via an inverter (12), and a control apparatus, which is designed to carry out a method according to one of Claims 1 to 4.

**Revendications**

1. Procédé pour déterminer une température de fonctionnement d'un moteur électrique, lequel est alimenté par le biais d'un onduleur, comprenant les étapes suivantes :

   (a) association d'un onduleur (12) à un moteur électrique (10) ;
   (b) étalonnage (K) de l'acquisition d'une valeur mesurée d'au moins un paramètre de fonctionnement du moteur électrique (10) par l'onduleur (12) associé ;
   (c) acquisition d'au moins une valeur mesurée (Rm) de l'au moins un paramètre de fonctionnement du moteur électrique (10) par l'onduleur (12) associé ; et
   (d) détermination de la température de fonctionnement (T) du moteur électrique (10) à l'aide de l'au moins une valeur mesurée (Rm) et du résultat d'étalonnage (K) de l'onduleur associé (12),

   **caractérisé en ce que**
   l'étape d'association (a) et l'étape d'étalonnage (b) sont exécutées dans une ligne de production (14) du moteur électrique (10) et de l'onduleur (12) qui possède un appareil de mesure de résistance (142),
   **en ce que** dans l'étape d'étalonnage (b), une valeur de référence (Rref) de l'au moins un paramètre de fonctionnement du moteur électrique (10) est mesurée, une valeur mesurée de référence (Rrefm) de l'au moins un paramètre de fonctionnement du moteur électrique (10) est acquise par l'onduleur (12) associé et le résultat d'étalonnage (K) est obtenu par une comparaison de l'au moins une valeur mesurée de référence (Rrefm) avec l'au moins une valeur de référence (Rref), la valeur de référence (Rref) et la valeur mesurée de référence (Rrefm) utilisées étant respectivement une résistance d'enroulement du moteur électrique (10), et
   **en ce que** la température de fonctionnement (T) du moteur électrique (10) est déterminée à l'étape de détermination (d) par un calcul à partir d'une valeur mesurée (Rm) de la résistance d'enroulement du moteur électrique (10), corrigée à l'aide du résultat d'étalonnage (K).

2. Procédé selon la revendication 1, **caractérisé en ce que** l'étape d'acquisition (c) et/ou l'étape de détermination (d) sont exécutées par un dispositif de commande (125) de l'onduleur (12).

3. Procédé selon l'une des revendications 1 à 2, **caractérisé en ce que** la température de fonctionnement (T) du moteur électrique (10) est en plus déterminée, à l'étape de détermination (d), par une correction à l'aide du résultat d'étalonnage (K) de la valeur mesurée (Tm) de la température de fonctionnement (T) du moteur électrique (10), calculée à partir de la valeur mesurée (Rm) de la résistance d'enroulement.

4. Procédé de commande d'un onduleur (12) qui alimente un moteur électrique (10) en fonction d'une température de fonctionnement (T) du moteur électrique (10), la température de fonctionnement (T) du moteur électrique (10) étant déterminée conformément à un procédé selon l'une des revendications 1 à 3.

5. Appareil ménager électrique, comprenant un moteur électrique (10) qui est alimenté par le biais d'un onduleur (12) et un dispositif de commande qui est conçu pour mettre en oeuvre un procédé selon l'une des revendications 1 à 4.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10361405 A1
- DE 10119201 A1
- DE 10331934 B3
- US 20060179895 A1
- EP 1677411 A1
- DE 102008001807 A1